**Europäisches Patentamt**

(19) **European Patent Office**

**Office européen des brevets**

(11) Veröffentlichungsnummer: **0 025 807**
**B1**

(12) **EUROPÄISCHE PATENTSCHRIFT**

(45) Veröffentlichungstag der Patentschrift:
**01.02.84**

(21) Anmeldenummer: **79200525.8**

(22) Anmeldetag: **19.09.79**

(51) Int. Cl.³: **G 01 G 3/16,** G 01 G 1/24,
G 01 G 21/16, G 01 L 1/10

(54) **Massen- und Kraftmessgerät.**

(43) Veröffentlichungstag der Anmeldung·
**01.04.81 Patentblatt 81/13**

(45) Bekanntmachung des Hinweises auf die Patenterteilung:
**01.02.84 Patentblatt 84/5**

(84) Benannte Vertragsstaaten.
**BE CH DE FR GB IT NL SE**

(56) Entgegenhaltungen:
**DE - A - 2 531 672**
**DE - C - 188 987**
**US - A - 1 759 886**
**US - A - 3 831 687**
**US - A - 3 938 603**

(73) Patentinhaber: **Wirth Gallo Patent AG,**
**Sonnenbergstrasse 55, CH-8032 Zürich (CH)**

(72) Erfinder: **Gallo, Mario, Dr., Krönleinstrasse 1,**
**CH-8044-Zürich (CH)**
Erfinder: **Wirth, Johannes, Sonnenbergstrasse 55,**
**CH-8032-Zürich (CH)**

BUNDESDRUCKEREI BERLIN

Massen- und Kraftmeßgerät

Die vorliegende Erfindung bezieht sich auf ein Massen- und Kraftmeßgerät mit einem Gestell, einem Lastträger und einem starren Meß-System, bei welchem nur ein kleiner Anteil der zu messenden Größe auf das Meß-System übertragen wird, wobei zwischen dem Gestell und dem Lastträger ein Zwischenkörper angeordnet ist, der aus zwei starren, durch mindestens einen biegsamen Teil verbundenen Teilen besteht, so daß sich der Lastträger über eine Anzahl von Belastungspunkten auf die starren Teile des Zwischenkörpers und dieser sich über die gleiche Anzahl von Stützpunkten auf das Gestell stützt. Es sind bereits Geräte dieser Gattung bekannt. Im Patent US-A-3 938 603 ist ein derartiges Gerät mit H-förmigem Zwischenkörper beschrieben, bei welchem ein Dehnungsmeßstreifen auf dem biegsamen Teil befestigt ist, dessen Verbiegung als analoges Maß für das Gewicht des zu wiegenden Gutes mißt und in Form von elektrischen Signalen wiedergibt.

Ferner ist im europäischen Patent EP-A-0 003 473 ein Gerät beschrieben, das ein Gestell, einen Lastträger und ein mit zwei Dynamometern, einer Referenzgröße und einem Krafteingang versehenes, starres Meß-System aufweist, bei welchem zwischen dem Lastträger und dem Gestell eine Lastfeder und zwischen dem Lastträger und dem Krafteingang des Meß-Systems eine schwächere Meßfeder angeordnet sind, so daß diese Federn kraftuntersetzende Hebelwerke in Massenmeßgeräten teilweise oder ganz ersetzen. Ferner können diese Federn auch zur Linearisierung von nichtlinearen Kennlinien dienen.

Ferner gehört zum Stand der Technik nach Art. 54, Abs. 3, EPÜ das im europäischen Patent EP-A-0 016 238 beschriebene Massen- und Kraftmeßgerät, das mit einem Gestell, einem mittels einer Parallelführung parallel und senkrecht geführten Lastträger, einem starren Meß-System und einen Übertragungsorgan, das einen Teil des Gewichtes der zu messenden Masse oder der zu messenden Kraft auf das Meß-System überträgt, versehen ist. Die Parallelführung besteht aus mindestens zwei, in zwei mindestens annähernd parallelen, übereinanderliegenden Ebenenen angeordneten Blattfedern, die im Gestell und im Lastträger eingespannt sind. Das Übertragungsorgan ist elastisch ausgeführt. Diese Ausführung erlaubt vor allem die Untersetzung der zu messenden Größe auch bei größeren Lasten ohne übertriebenen Kostenaufwand zu bewältigen.

Das erstgenannte Gerät ist, wegen der inherenten Begrenzungen der Dehnungsmeßstreifentechnik für viele Anwendungen, insb. wenn hohe Präzision erfordert wird, ungeeignet.

Dem zweiten Gerät haftet der Nachteil an, daß der Lastträger und die elastische Untersetzung getrennt geführt werden müssen. Während dieser Nachteil im Falle des dritten Gerätes durch die Kombination dieser Führungen behoben ist, bedarf die entsprechende Konstruktion einer erheblichen Bauhöhe. In manchen Anwendungen ist dies unerheblich, in anderen jedoch ist eine niedrige Bauhöhe unerläßlich.

Die der Erfindung zu Grunde liegende Aufgabe besteht darin, sowohl große Kräfte ohne aufwendige Hebelsysteme untersetzen, als auch dabei eine niedrige Bauhöhe beibehalten zu können. Gleichzeitig sollten weder Führungsprobleme der verschiedenen Elemente des Gerätes noch Begrenzungen hinsichtlich der erreichbaren Genauigkeit bestehen.

Das Hauptmerkmal der Erfindung zur Lösung dieser Aufgabe besteht darin, daß an jedem der starren Teile eine aus der Ebene des biegsamen Teils herausragende Feder befestigt ist, deren freies Ende mit dem Meß-System verbunden ist, wobei der Zwischenkörper gemäß den Ansprüchen 1, 2, 5 und 6 jeweils unterschiedlich ausgebildet ist.

In der beiliegenden Zeichnung sind Ausführungsbeispiele des Erfindungsgegenstandes schematisch dargestellt.

Es zeigt

Fig. 1 einen Aufriß eines ersten Ausführungsbeispieles,

Fig. 2 in schaubildlicher Ansicht den Zwischenkörper der Fig. 1,

Fig. 3 einen Teil des Zwischenkörpers der Fig. 2 in belastetem Zustand,

Fig. 4—9 in schaubildlicher Ansicht je eine Variante der Ausführung des Zwischenkörpers,

Fig. 10 ein zweites Ausführungsbeispiel,

Fig. 11 im Grundriß den Zwischenkörper der Fig. 10,

Fig. 12 ein drittes Ausführungsbeispiel und

Fig. 13 im Grundriß den Zwischenkörper der Fig. 12.

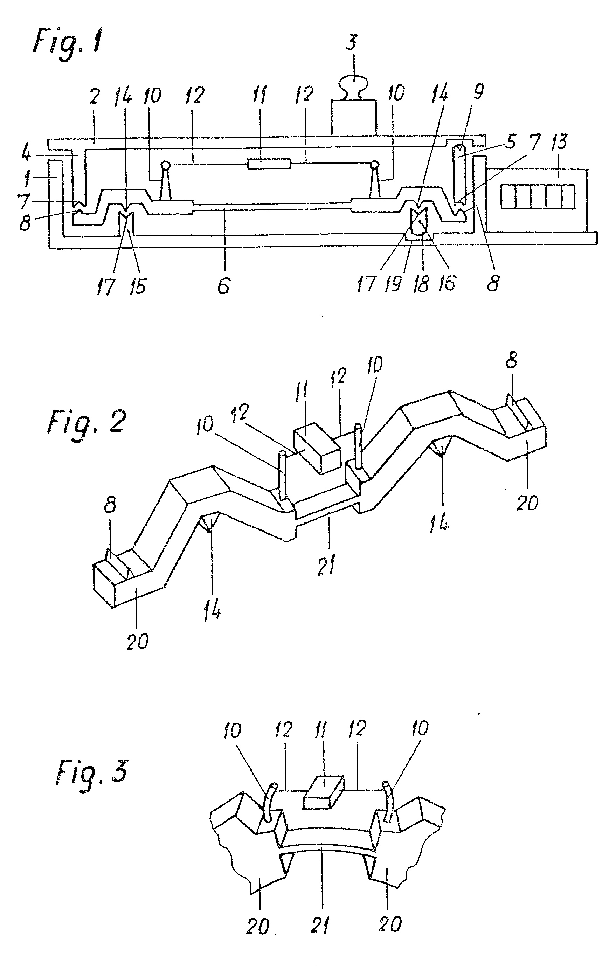

Das in Fig. 1 schematisch dargestellte Massenmeßgerät weist ein Gestell 1 und einen Lastträger 2 für die zu messende Last 3 auf. Der Lastträger 2 stützt sich einerseits über einen Arm 4 und andererseits über eine Stelze 5 auf einen Zwischenkörper 6. Die unteren Ende des Armes 4 und der Stelze 5 sind mit Pfannen 7 versehen, die mit zwei Lastschneiden 8 des Zwischenkörpers 6 zusammenspielen. Die Stelze 5 ist an ihrem oberen Ende mit einer Abwälzfläche 9 versehen, die mit der unteren Seite des Lastträgers 2 zusammenspielt. Wie nachstehend ausführlicher beschrieben, sind auf dem Zwischenkörper 6 zwei Federn 10 angebracht. Das starre Meß-System 11 ist von zwei Drähten 12 gehalten, die an den Federn 10 befestigt sind. Dieses Meß-System 11 kann z. B. aus einer Kraftmeßzelle mit zwei schwingenden Saiten bekannter Bauart bestehen. Das Meß-System 11 ist in an sich bekannter und daher nicht näher dargestellten Weise mit einer Auswertungs- und Anzeigevorrichtung 13 verbunden, die die Masse der zu messenden Last 3 anzeigt. Der Zwischenkörper 6 weist ferner zwei Stützschneiden 14 auf, die sich einerseits auf eine Stütze 15 des Gestelles 1 und andererseits auf eine Stelze 16 stützen. Stütze 15 und Stelze 16 sind mit entsprechenden Pfannen 17 versehen. Die Stelze 16 weist an ihrem unteren Ende eine Abwälzfläche 18 auf, die mit einer entsprechenden Fläche 19 des Gestelles 1 zusammenspielt.

In Fig. 2 ist der Zwischenkörper 6 schaubildlich dargestellt. Er ist I-förmig und besteht aus zwei starren Teilen 20 und einem elastischen, biegsamen Teil 21. Die beiden Federn 10, die in diesem Ausführungsbeispiel als Stabfedern ausgeführt sind, sind an den starren Teilen 20 befestigt. Bei zentral angeordneter Last 3 biegt sich der Teil 21 und nimmt die Form eines Kreisbogens (Fig. 3) ein. Ist die Last 3 seitlich angeordnet, so nimmt der Teil 21 die Form eines Parabelbogens ein. In beiden Fällen ist die Verdrehung des Teiles 21 lastproportional und unabhängig von der Lage der Last 3. Bei dieser Verdrehung ändert sich der Abstand der Einspannstellen der Federn 10 in den Teilen 20 im wesentlichen nicht. Hingegen würden sich ihre oberen Enden, wären sie frei, von einander abwenden. Da sie jedoch an den Drähten 12 befestigt sind, müssen sich die Federn 10 verbiegen. Sie üben dabei auf das Meß-System 11 eine lastproportionale und lastortunabhängige Kraft aus. In Fig. 3 ist zur besseren Erläuterung der Erfindung die Verbiegung der Federn 10 stark übertrieben dargestellt. In der Praxis würden sich die Enden der Federn 10, wären sie frei, um höchstens 0,1 mm bis 1 mm bewegen. Da sie jedoch über die Drähte 12 mit dem Meß-System 11 verbunden sind, bewegen sich ihre Spitzen um höchstens 0,01 mm bis 0,1 mm. Die beiden Schneidenpaare, bestehend je aus einer Lastschneide 8 und einer Stützschneide 14, sind bezüglich des Meß-Systems 11 symmetrisch angeordnet. In diesem Ausführungsbeispiel weisen die Teile 20 eine Form auf, die es erlaubt, alle vier Schneiden 8 und 14 in der gleichen horizontalen Ebene anzuordnen. Diese Anordnung ist günstig, sie ist jedoch zur Ausführung der Erfindung nicht notwendig.

Das dargestellte Gerät ist vollkommen statisch bestimmt. Die einzelnen Kräfte, die vom Gestell 1 und vom Lastträger 2 auf die Schneiden 8 und 14 wirken, sind durch die Größe und die Lage der Last 3 eindeutig bestimmt.

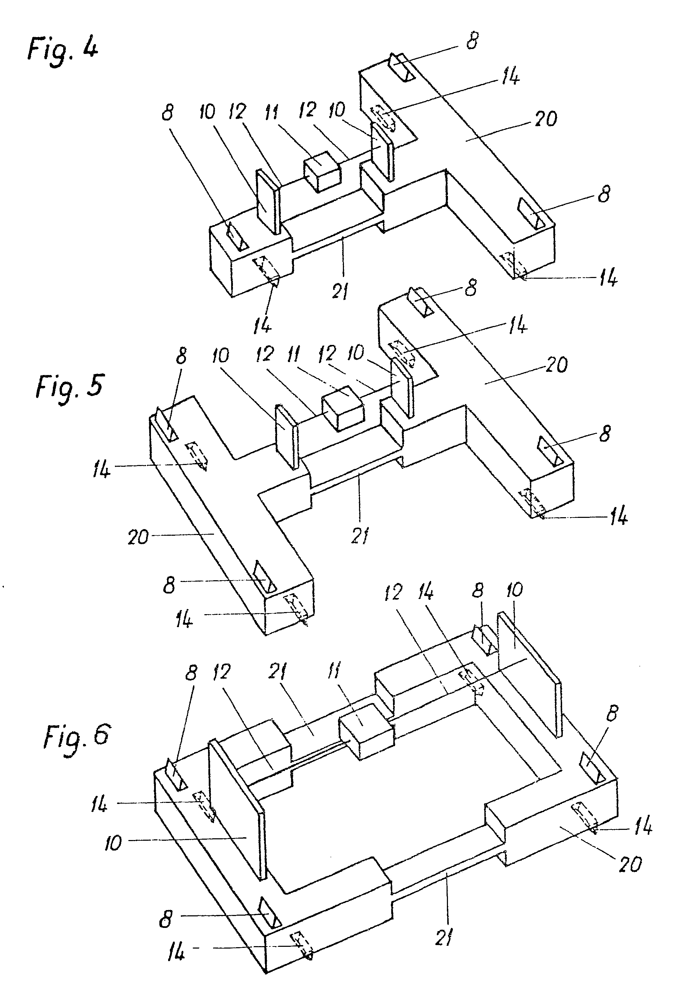

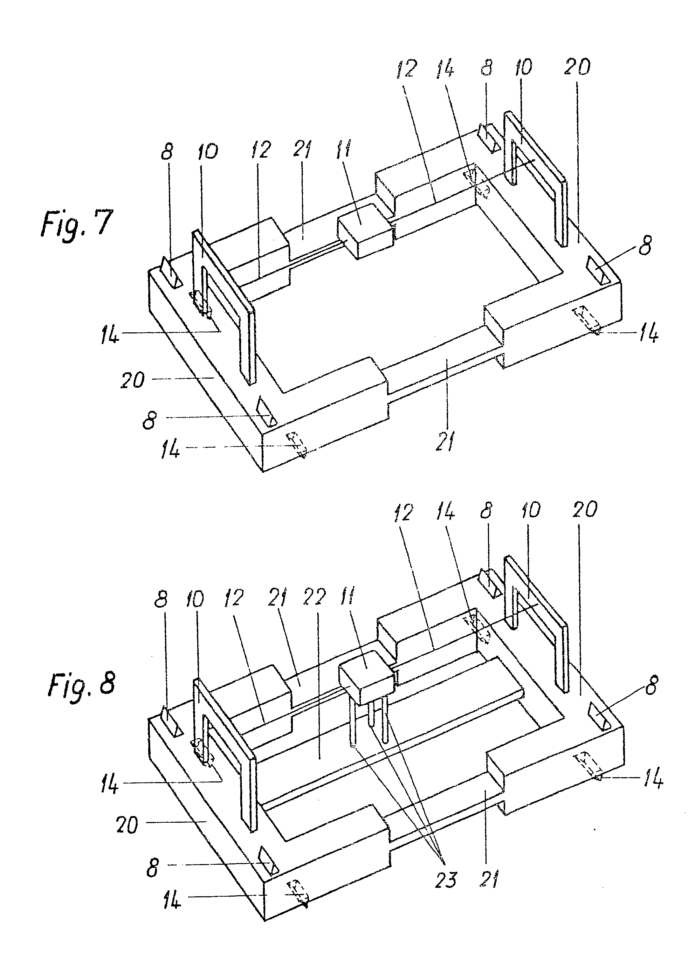

In Fig. 4 ist ein Zwischenkörper dargestellt, bei welchem die Federn 10 als Blattfedern ausgeführt sind. Ferner sind drei Schneidenpaare vorgesehen. Der rechte Teil 20 trägt zwei Paare von Schneiden 8 und 14, der linke Teil 20 nur ein solches Paar. Die Lastschneiden 8 liegen alle in der gleichen horizontalen Ebene, die Stützschneiden 14 liegen alle in einer anderen, zur ersten parallelen Ebene. Diese Schneidenpaare sind bezüglich des Meß-Systems 11 symmetrisch angeordnet. Diese Anordnung der Schneiden gilt auch für die Ausführungsbeispiele der Fig. 6–9.

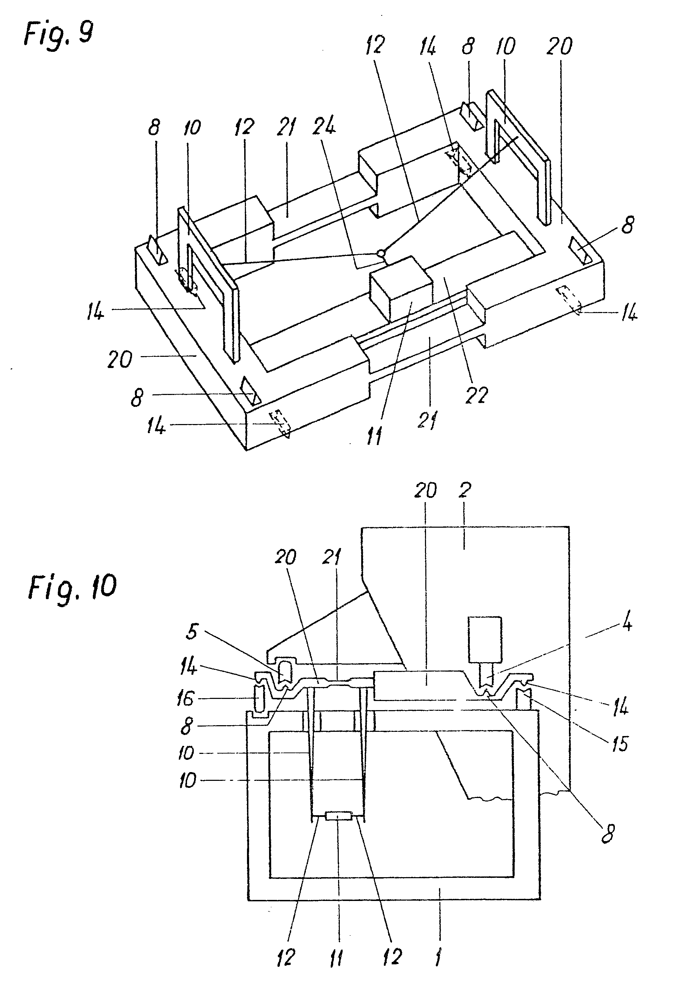

In diesen Ausführungsbeispielen besteht der Zwischenkörper aus zwei starren, C-förmigen Teilen 20 und aus zwei biegsamen Teilen 21. Die Teile 20 weisen jede zwei Paare von Schneiden 8 und 14 auf. Im Ausführungsbeispiel der Fig. 6 bestehen die Federn 10 aus Blattfedern. In den Ausführungsbeispielen der Fig. 7–9 bestehen die Federn 10 aus C-förmig ausgebildeten, flachen Federn, die unter Belastung sowohl auf reine Biegung als auch auf Verdrehung belastet werden. Im Ausführungsbeispiel nach Fig. 8 ist zwischen den beiden Teilen 20 ein dünner Steg 22 vorgesehen, dessen Nachgiebigkeit um ein Mehrfaches größer ist als diejenige der Teile 21, so daß seine Wirkung bei Belastung des Zwischenkörpers vernachlässigbar ist. Dieser Steg 22 dient als Halterung für das mit Stützen 23 versehene Meß-System 11. Im Ausführungsbeispiel nach Fig. 9 ist der Steg 22 asymmetrisch angeordnet, und das Meß-System 11 ist unmittelbar auf diesem Steg 22 einstellbar befestigt. Die Drähte 12 bilden dann mit einem zusätzlichen Draht 24 einen einstellbaren Seilzug, so daß die von den Federn 10 ausgeübte Kraft noch nach Wunsch unter- oder übersetzt werden kann.

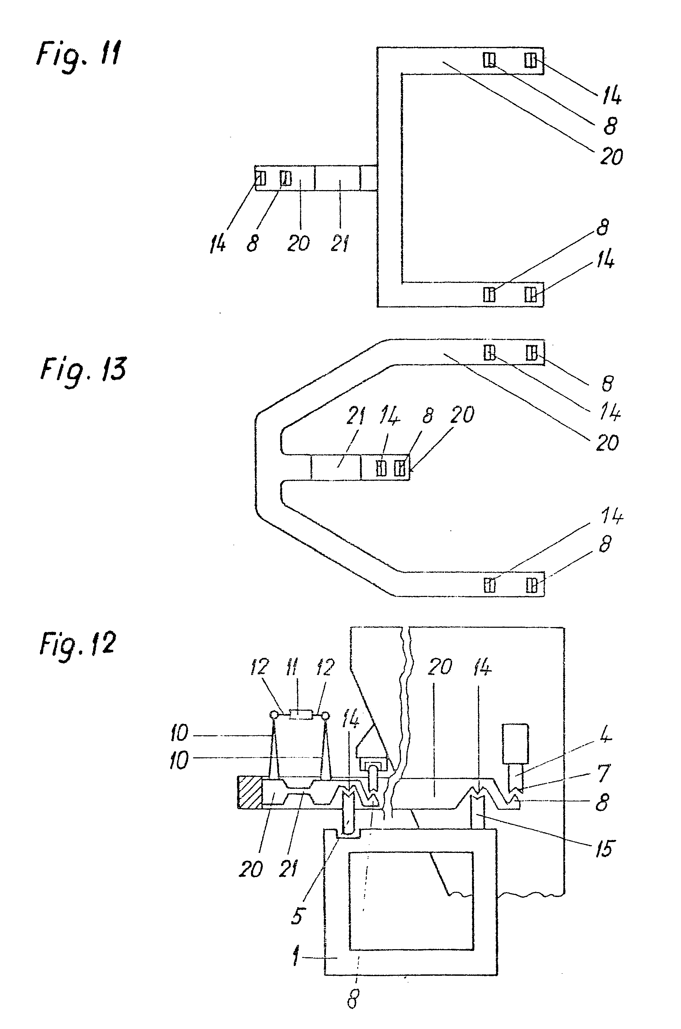

In Fig. 10–11 ist eine Variante des Ausführungsbeispieles nach Fig. 1 dargestellt, die zur Aufnahme eines als Behälter ausgebildeten Lastträgers dient. Eine der Teile 20 ist C-förmig während der andere aus einem geraden Stück besteht. Der C-förmige Teil 20 trägt zwei Schneidenpaare 8, 14, der andere trägt nur ein solches Paar. In diesem Ausführungsbeispiel sind die Schneiden 8, 14 des linken Teiles 20 näher aneinander angeordnet, als die Schneiden 8, 14 der beiden Schneidenpaare des rechten Teiles 20. Ferner ist der Teil 21 näher diesem Schneidenpaar des linken Teiles 20 als den Schneidenpaaren des rechten Teiles 20 angeordnet. Fig. 12–13 zeigen eine Variante zu Fig. 10–11, bei welcher der Teil 21 außerhalb der von den drei Schneidenpaaren 8, 14 gebildeten Dreiecks liegt.

In der obigen Beschreibung bestehen die Stütz- und Belastungspunkte aus Schneiden und Pfannen. Sie könnten aber auch z. B. aus Kreuz- oder Bandgelenken gebildet sein. Die biegsamen Teile 21 sind entsprechend der vorgesehenen Anwendung zu bemessen. Meßgeräte der beschriebenen Gattung können für Lastbereiche zwischen 30 kg und 3 t verwendet werden.

**Patentansprüche**

1. Massen- und Kraftmeßgerät mit einem Gestell, einem Lastträger und einem starren Meß-System, bei welchem nur ein kleiner Anteil der zu messenden Größe auf das Meß-System übertragen wird, wobei zwischen dem Gestell und dem Lastträger ein Zwischenkörper angeordnet ist, der aus zwei starren, durch mindestens einen biegsamen Teil verbundenen Teil verbundenen Teilen besteht, so daß sich der Lastträger über eine Anzahl von Belastungspunkten auf die starren Teile des Zwischenkörpers und dieser sich über die gleiche Anzahl von Stützpunkten auf das Gestell stützt, dadurch gekennzeichnet, daß der Zwischenkörper I-förmig ist und zwei Stütz- und Lastschneiden aufweist, und daß an jedem starren Teil eine aus der Ebene des biegsamen Teiles herausragende Feder befestigt ist, deren freies Ende mit dem Meß-System verbunden ist.

2. Massen- und Kraftmeßgerät mit einem Gestell, einem Lastträger und einem starren Meß-System, bei welchem nur ein kleiner Anteil der zu messenden Größe auf das Meß-System übertragen wird, wobei zwischen dem Gestell und dem Lastträger ein Zwischenkörper angeordnet ist, der aus zwei starren, durch mindestens einen biegsamen Teil verbundenen Teilen besteht, so daß sich der Lastträger über eine Anzahl von Belastungspunkten auf die starren Teile des Zwischenkörpers und dieser sich über die gleiche Anzahl von Stützpunkten auf das Gestell stützt, dadurch gekennzeichnet, daß der Zwischenkörper aus zwei C-förmigen starren Teilen und zwei geraden biegsamen Teilen besteht und daß die starren Teile je zwei Stütz- und zwei Lastschneiden aufweisen, und daß an jedem starren Teil eine aus der Ebene des biegsamen Teiles herausragende Feder befestigt ist, deren freies Ende mit dem Meß-System verbunden ist.

3. Massen- und Kraftmeßgerät nach Anspruch 2, dadurch gekennzeichnet, daß die an den starren Teilen befestigten Federn C-förmige, auf Biegung und Verdrehung belastbare Blattfedern sind.

4. Massen- und Kraftmeßgerät nach Anspruch 2, dadurch gekennzeichnet, daß zwischen den beiden starren Teilen ein Steg zur Stütze des Meß-Systems angeordnet ist.

5. Massen- und Kraftmeßgerät mit einem Gestell, einem Lastträger und einem starren Meß-System, bei welchem nur ein kleiner Anteil der zu messenden Größe auf das Meß-System übertragen wird, wobei zwischen dem Gestell und dem Lastträger ein Zwischenkörper angeordnet ist, der aus zwei starren, durch mindestens einen biegsamen Teil verbundenen Teilen besteht, so daß sich der Lastträger über eine Anzahl von Belastungspunkten auf die starren Teile des Zwischenkörpers und dieser sich über die gleiche Anzahl von Stützpunkten auf das Gestell stützt, dadurch gekennzeichnet, daß der Zwischenkörper T-förmig ist, daß der eine starre Teil zwei Stütz- und zwei Lastschneiden und der andere nur eine Stütz- und eine Lastschneide aufweist, und daß an jedem starren Teil eine aus der Ebene des biegsamen Teiles herausragende Feder befestigt ist, deren freies Ende mit dem Meß-System verbunden ist.

6. Massen- und Kraftmeßgerät mit einem Gestell, einem Lastträger und einem starren Meß-System, bei welchem nur ein kleiner Anteil der zu messenden Größe auf das Meß-System übertragen wird, wobei zwischen dem Gestell und dem Lastträger ein Zwischenkörper angeordnet ist, der aus zwei starren, durch mindestens einen biegsamen Teil verbundenen Teilen besteht, so daß sich der Lastträger über eine Anzahl von Belastungspunkten auf die starren Teile des Zwischenkörpers und dieser sich über die gleiche Anzahl von Stützpunkten auf das Gestell stützt, dadurch gekennzeichnet, daß der Zwischenkörper H-förmig ist und daß die starren Teile je zwei Stütz- und zwei Lastschneiden aufweisen, und daß an jedem starren Teil eine aus der Ebene des biegsamen Teiles herausragende Feder befestigt ist, deren freies Ende mit dem Meß-System verbunden ist.

## Claims

1. Mass and force meter with a frame, a load support and a rigid measuring system, in which only a small part of the weight of the amount to be measured is transmitted to said measuring system, an intermediate body mounted between said load support and said frame which comprises two rigid parts linked by at least one resilient part, said load support being connected to the rigid parts of said intermediate body by means of a number of load connections and said intermediate body being supported by said frame by means of an equal number of supporting connections, characterized in that the intermediate body is I-shaped and has two supporting knives and two load knives, all four mounted in the same plane and in that each rigid part carries a spring lying outside the plane of said resilient part, the ends of said springs being connected to said measuring system.

2. Mass and force meter with a frame, a load support and a rigid measuring system, in which only a small part of the weight of the amount to be measured is transmitted to said measuring system, an intermediate body mounted between said load support and said frame which comprises two rigid parts linked by at least one resilient part, said load support being connected to the rigid parts of said intermediate body by means of a number of load connections and said intermediate body being supported by said frame by means of an equal number of supporting connections, characterized in that the intermediate body consists of two C-shaped rigid parts and two straight resilient parts, said rigid parts having each two supporting knives and two load knives and in that each rigid part carries a spring lying outside the plane of said resilient part, the ends of said springs being connected to said measuring system.

3. Mass and force meter according to claim 2, characterized in that the springs fixed to said rigid parts are flat springs responding to flexion and torsion loads.

4. Mass and force meter according to claim 2, characterized in that a support for the measuring system is mounted between both rigid parts.

5. Mass and force meter with a frame, a load support and a rigid measuring system, in which only a small part of the amount to be measured is transmitted to said measuring system, an intermediate body mounted between said load support and said frame which comprises two rigid parts linked by at least one resilient part, said load support being connected to the rigid parts of said intermediate body by means of a number of load connections and said intermediate body being supported by said frame by means of an equal number of supporting connections, characterized in that the intermediate body is T-shaped, one of the rigid parts having two supporting knives and two load knives, the other having only one supporting knife and one load knife and in that each rigid part carries a spring outside the plane of said resilient part, the ends of said springs being connected to said measuring system.

6. Mass and force meter with a frame, a load support and a rigid measuring system, in which only a small part of the weight of the amount to be measured is transmitted to said measuring system, an intermediate body mounted between said load support and said frame which comprises two rigid parts linked by at least one resilient part, said load support being connected to the rigid parts of said intermediate body by means of a number of load connections and said intermediate body being supported by said frame by means of an equal number of supporting connections, characterized in that the intermediate body is H-shaped as known in the art, the rigid parts having two supporting knives and two load knives and in that each rigid part carries a spring lying outside the plane of said resilient part, the ends of said springs being connected to said measuring system.

**Revendications**

1. Appareil de mesure de masses et de forces comprenant un bâti, un porteur de charge, un système de mesure rigide dans lequel seulement une petite partie de la grandeur à mesurer est transmise au système de mesure, un corps intermédiaire étant monté entre le bâti et le porteur de charge, ce corps étant formé par deux parties rigides reliées par au moins une partie flexible, de sorte que le porteur de charge prenne appui sur ces parties rigides en un certain nombre de points de charge et que le corps intermédiaire prenne appui sur le bâti sur un nombre égal de points d'appui, caractérisé en ce que le corps intermédiaire est un forme de I et présente deux couteaux d'appui et deux couteaux de charge, tous disposés dans le même plan et en ce qu'un ressort est fixé à chacune des dites parties rigides de manière à s'étendre hors du plan de la partie flexible, les extrémités libres de ces ressorts étant reliées au système de mesure.

. 2. Appareil de mesure de masses et de forces comprenant un bâti, un porteur de charge, un système de mesure rigide dans lequel seulement une petite partie de la grandeur à mesurer est transmise au système de mesure, un corps intermédiaire étant monté entre le bâti et le porteur de charge, ce corps étant formé par deux parties rigides reliées par au moins une partie flexible, de sorte que le porteur de charge prenne appui sur ces parties rigides en un certain nombre de points de charge et que le corps intermédiaire prenne appui sur le bâti sur un nombre égal de points d'appui, caractérisé en ce que le corps intermédiaire consiste en deux parties rigides en forme de C et deux parties flexibles, ces parties rigides présentant chacune deux couteaux de charge et deux couteaux d'appui et en ce qu'un ressort est fixé à chacune des dites parties rigides de manière à s'étendre hors du plan de la partie flexible, les extrémités libres de ces ressorts étant reliées au système de mesure.

3. Appareil de mesure de masses et de forces selon la revendication 2, caractérisé en ce que les ressorts fixés aux parties rigides en C sont des ressorts plats soumis à flexion et torsion.

4. Appareil de mesure de masses et de forces selon la revendication 2, caractérisé en ce qu'un support pour le système de mesure est monté entre les deux parties rigides.

5. Appareil de mesure de masses et de forces comprenant un bâti, un porteur de charge, un système de mesure rigide dans lequel seulement une petite partie de la grandeur à mesurer est transmise au système de mesure, un corps intermédiaire étant monté entre le bâti et le porteur de charge, ce corps étant formé par deux parties rigides reliées par au moins une partie flexible, de sorte que le porteur de charge prenne appui sur ces parties rigides en un certain nombre de points de charge et que le corps intermédiaire prenne appui sur le bâti sur un nombre égal de points d'appui, caractérisé en ce que le corps intermédiaire est en forme de T, l'une des parties rigides présentant un couteau de charge et un couteau d'appui, l'autre partie rigide présentant deux couteaux de charge et deux couteaux d'appui et en ce qu'un ressort est fixé à chacune des dites parties rigides de manière à s'étendre hors du plan de la partie flexible, les extrémités libres de ces ressorts étant reliées au système de mesure.

6. Appareil de mesure de masses et de forces comprenant un bâti, un porteur de charge, un système de mesure rigide dans lequel seulement une petite partie de la grandeur à mesurer est transmise au système de mesure, un corps intermédiaire étant monté entre le bâti et le porteur de charge, ce corps étant formé par deux parties rigides reliées par au moins une partie flexible, de sorte que le porteur de charge prenne appui sur ces parties rigides en un certain nombre de points de charge et que le corps intermédiaire prenne appui sur le bâti sur un nombre égal de points d'appui, caractérisé en ce que le corps intermédiaire est de manière connue en forme de H, les parties rigides présentant chacune deux couteaux de charge et deux couteaux d'appui et en ce qu'un ressort est fixé à chacune des dites parties rigides de manière à s'étendre hors du plan de la partie flexible, les extrémités libres de ces ressorts étant reliées au système de mesure.

Fig. 1

Fig. 2

Fig. 3

Fig. 4

Fig. 5

Fig. 6

Fig. 7

Fig. 8

**Fig. 9**

**Fig. 10**

Fig. 11

Fig. 13

Fig. 12